Europäisches Patentamt

European Patent Office

Office européen des brevets

(19)

(11) Veröffentlichungsnummer: **0 069 217**
**B1**

(12) **EUROPÄISCHE PATENTSCHRIFT**

(45) Veröffentlichungstag der Patentschrift:
26.02.86

(51) Int. Cl.⁴: **C 08 L 67/06**

(21) Anmeldenummer: **82104064.9**

(22) Anmeldetag: **11.05.82**

(54) **Eindickungspasten zur Herstellung von in der Hitze härtbaren, auf ungesättigten Polyesterharzen basierenden Formmassen.**

(30) Priorität: **08.07.81 DE 3126862**

(43) Veröffentlichungstag der Anmeldung:
**12.01.83 Patentblatt 83/2**

(45) Bekanntmachung des Hinweises auf die Patenterteilung:
**26.02.86 Patentblatt 86/9**

(84) Benannte Vertragsstaaten:
**DE FR GB IT NL**

(56) Entgegenhaltungen:
**DE - A - 2 223 989**
**DE - A - 2 731 320**

(73) Patentinhaber: **HÜLS AKTIENGESELLSCHAFT, Patentabteilung / PB 15 - Postfach 13 20, D-4370 Marl 1 (DE)**

(72) Erfinder: **Rohmer, Hartmut, Dr., Gersthofener Strasse 22, D-4370 Marl (DE)**
Erfinder: **Wolpers, Jürgen, Dr., Beisingstrasse 16, D-4630 Bochum (DE)**

LIBER, STOCKHOLM 1986

## Beschreibung

Die Anmeldung betrifft Eindickungspasten gemäß dem Oberbegriff des Patentanspruchs 1.

Derartige Eindickungspasten sind grundsätzlich aus der DE-OS 27 31 320 bekannt. Zu ihrer Zubereitung werden Anpastpolyester eingesetzt, die unter Mitverwendung von monofunktionellen Alkoholen als Molekulargewichtsregler (Kettenabbrecher) erhalten sind.

Die Formmassen werden auch als Prepregs oder Preßmassen bezeichnet. Die Prepregs werden aus den ungesättigten Polyesterharzen, welche mit den Eindickungspasten bis zur klebfreien, teigartigen Konsistenz eingedickt werden, zusammen mit Glasfasern, Füllstoffen, Pigmenten, Stabilisatoren und Initiatoren hergestellt. Die Formmassen sind lagerfähig und lassen sich leicht in Preßformen einlegen.

Die bei Einsatz der Eindickungspasten des geschilderten Standes der Technik erzeugten Preßteile (gehärteten Formkörper) zeigen eine vergleichsweise geringe Wasseraufnahme.

Eindickungspasten sollen eine gute Lagerstabilität aufweisen, d. h. die Viskosität der Eindickungspasten darf bei der Lagerung bei Raumtemperatur nur in geringem Maße zunehmen.

Die Lagerstabilität der Eindickungspasten des geschilderten Standes der Technik entspricht jedoch nicht immer den Anforderungen der Praxis.

Die Aufgabe der Erfindung ist es, Eindickungspasten bereitzustellen, welche ein ausgewogenes Eigenschaftsbild aufweisen. Sie sollen eine gute Lagerstabilität und ein gutes Eindickungsvermögen aufweisen. Die Wasseraufnahme der damit erzeugten, gehärteten Formkörper soll gering sein.

Die Aufgabe wurde in überraschender Weise wie im Patentanspruch 1 angegeben gelöst.

Aus der DE-OS 22 23 989 sind zwar bereits Eindickungspasten bekannt, zu deren Zubereitung Anpastpolyester eingesetzt werden, die unter Mitverwendung von Monocarbonsäuren als Molekulargewichtsregler erhalten sind. Diese Anpastpolyester weisen vorzugsweise eine Säurezahl von 15 bis 30 und eine OH-Zahl von 150 bis 270 auf. Diese Anpastpolyester besitzen eine gute Lagerstabilität. Die mit diesen Eindickungspasten erzeugten Preßteile zeigen jedoch eine vergleichsweise hohe Wasseraufnahme (vgl DE-OS 27 31 320, Seite 3 Absatz 2) Ferner ist die Maß-nahme, Monocarbonsäuren zuzusetzen, nicht isoliert sondern nur in Kombination mit der relativ hohen OH-Zahl offenbart.

Die Eindickungspasten der Erfindung werden vorzugsweise aus solchen Anpastpolyestern hergestellt, welche unter Mitverwendung von gesättigten $C_6$- bis $C_{12}$-Fettsäuren als Molekulargewichtsregler erhalten sind.

Ein erfindungsgemäß besonders geeignetes Gemisch von gesättigten $C_6$- bis $C_{12}$-Fettsäuren ist unter der Bezeichnung "Vorlauffettsäure" im Handel erhältlich.

Den Anpastpolyestern liegt in der Regel ein Molverhältnis der $\alpha,\beta$- olefinisch ungesättigten Dicarbonsäure und der Monocarbonsäure im Bereich von 1: 0,5 bis 1: 1,5 zugrunde.

Als $\alpha,\beta$- olefinisch ungesättigte Dicarbonsäuren bzw. ihre Derivate sind beispielsweise Itacon-, Citracon-, Mesaconsäure und insbesondere Maleinsäureanhydrid (MSA) und Fumarsäure geeignet. Bis zu 25 Mol-% der Dicarbonsäuren können auch gesättigte aliphatische oder cycloaliphatische Dicarbonsäuren oder auch aromatische Dicarbonsäuren sein.

Als bifunktionelle Alkohole sind beispielsweise Ethylenglykol, Propandiol-1.2, Propandiol-1.3, Butandiol-1.4, Hexandiol-1-6, Neopentylglykol, Diethylenglykol und Dipropylenglykol geeignet.

Die erfindungsgemäßen Eindickungspasten eignen sich zum Eindicken von ungesättigten Polyesterharzen zur Herstellung von Formmassen, d. h. Prepregs und Preßmassen.

Einzudickende ungesättigte Polyesterharze sind solche, wie sie in J. Björksten, "Polyesters and their Applications", Reinhold Publishing Corp., New York (1951), und in P. H. Selden, "Glasfaserverstärkte Kunststoffe", Springer Verlag (1967), beschrieben sind.

Die erfindungsgemäßen Eindickungspasten kann man besonders zur Herstellung von Formmassen gemäß Anspruch 2, verwenden.

Die Eindickungspasten werden im allgemeinen in Mengen von 1 bis 20 Gew.%, bezogen auf das einzudickende, ungesättigte Polyesterharz, eingesetzt.

Die Erfindung wird durch die folgenden Beispiele erläutert. Darin bedeuten Teile Gewichtsteile und % Gew.%, falls nicht anders angegeben.

Die erfindungsgemäßen Kompositionen werden mit Ziffern, die nicht erfindungsgemäßen Kompositionen werden mit Buchstaben bezeichnet.

## Beispiele

### Herstellung von Anpastpolyester 1

2,0 Mol MSA,
2,3 Mol Vorlauffettsäure (ca. 2 % $C_6$-, 60 % $C_8$-, 35 % $C_{10}$- und 3 % $C_{12}$-Säure) und
3,3 Mol Dipropylenglykol
werden unter Durchleiten eines Stickstoffstromes 7 1/2 h bei 200 °C verestert.
Säurezahl: 21,3
OH-Zahl: 43,7

**0 069 217**

Viskosität (4 mm Auslaufbecher, 25 °C): 48 s

## Herstellung von Anpastpolyester A (gemäß DE-OS 27 31 320)

2,0 Mol MSA,
2,3 Mol 2-Ethylhexanol-1 und
1,0 Mol Dipropylenglykol
werden unter Durchleiten eines Stickstoffstromes
7 h bei 180 bis 200° C verestert.
Säurezahl: 21,6
OH-Zahl: 49,9
Viskosität: 31 s

## Herstellung des einzudickenden Polyesterharzes

1,0 Mol Isophthalsäure und
2,08 Mol Propandiol-1.2 werden bei 180 °C bis zur Säurezahl 40 vorverestert. Nach Zugabe von 1,0 Mol MSA wird die Veresterung unter Durchleiten eines Stickstoffstromes bei 180 bis 200 °C bis zu einer Säurezahl von 25 fortgeführt. Die Zugabe von 0,01 % Hydrochinon zur Stabilisierung und von 40 % Styrol, jeweils bezogen auf das Polyesterharz, liefert ein Harz mit einer Säurezahl von 14,9 und einer Viskosität von 125 s.

## Prüfung der Wasseraufnahme nach DIN 53 495

Nach folgenden Härtungsrezepturen werden bei 20 C gehärtete <u>Prüfkörper</u> (40 · 40 · 4 mm) erhalten:

| | |
|---|---|
| Nullprobe | 100 Teile Polyesterharz, |
| | 1 Teil Methylethylketonperoxid, 50 %ig, |
| | 0,5 Teile Co-Beschleuniger *) |
| 1 | 90 Teile Polyesterharz, |
| | 10 Teile Anpastpolyester 1, |
| | 1 Teil Methylethylketonperoxid, 50 %ig, |
| | 0,5 Teile Co-Beschleuniger *) |
| A (DE-OS 27 31 320) | 90 Teile Polyesterharz, |
| | 10 Teile Anpastpolyester A, |
| | 1 Teil Methylethylketonperoxid, 50 %ig, 0,5 Teile Co-Beschleuniger *) |

*) (1 %ig an Co)

Nach 5monatiger Lagerung der Prüfkörper in destilliertem Wasser bei 20 °C wird ihre Wasseraufnahme gravimetrisch bestimmt.

## Tabelle 1

Wasseraufnahme von Prüfkörpern

| Prüfkörper | Wasseraufnahme |
|---|---|
| Nullprobe | 1,20 % |
| 1 | 1,18 % |
| A (DE-OS 27 31 320) | 1,21 % |

**Prüfung der Lagerstabilität**

Aus dem Anpastpolyester 1 bzw. A und Magnesiumoxid in einer für Eindickungspasten üblichen Qualität (40 % MgO bezogen auf die Eindickungspaste) werden die Eindickungspasten 1 und A hergestellt und 42 Tage bei 20 °C gelagert. Dann wird ihre Viskosität bei 20 °C gemessen.

**Tabelle 2**

Lagerstabilität von Eindickungspasten

| Eindickungspaste | Viskosität /Pa·s/ |
|------------------|-------------------|
| 1 | 786 |
| A (DE-OS 27 31 320) | fest (> 20 000) |

**Prüfung des Eindickungsvermögens**

Das Eindickungsvermögen der Eindickungspasten wird nach der Methode von Krämer et al, Kunststoffe 58 (1968), Seite 913, durch die Zeit in Sekunden charakterisiert, in der eine Normkugel unter ihrem Eigengewicht von 275 g bei 20 °C 5 mm tief in eine Formmasse eindringt, welche unter Einsatz der Eindickungspaste und des oben beschriebenen Polyesterharzes hergestellt und durch 24stündige Lagerung bei 20 °C gereift wurde ($E_{24h}$ [s]).
Analog der Herstellung des Anpastpolyesters 1 wird der Anpastpolyester 2 hergestellt:
1,5 Mol M8A,
0,5 Mol Tetrahydrophthalsäureanhydrid,
2,5 Mol Vorlauffettsäure,
3,4 Mol Dipropylenglykol.
Säurezahl: 21,2
OH-Zahl: 44,8
Viskosität: 47 s

**Rezeptur zur Herstellung von Anpastpolyester B (gemäß DE-A8 22 23 989):**

2,0 Mol MSA,
2,0 Mol Vorlauffettsäure,
0,5 Mol Stearinsäure,
5,5 Mol Dipropylenglykol.
Säurezahl: 21,5
OH-Zahl: 194,5
Viskosität: 27 s

**Rezepturen zur Herstellung der Formmassen**

100 Teile Polyesterharz,
100 Teile $CaCO_3$,
7,5 Teile Eindickungspaste 2 bzw. B.
Die Eindickungspasten bestehen zu 40 % aus MgO.
Der Rest ist Anpastpolyester 2 im Falle von Eindickungs-Paste 2 bzw. Anpastpolyester B im Falle von Eindickungspaste B.

**Tabelle 3**

Eindickungsvermögen

| Formmasse | $E_{24h}$ $[s]$ |
|---|---|
| 2 | 52 |
| B (DE-AS 22 23 989) | 25 |

**Patentansprüche:**

1. Eindickungspaste zur Herstellung von in der Hitze härtbaren, auf ungesättigten Polyesterharzen basierenden Formmassen, aus denen gehärtete Formkörper mit nur geringer Wasseraufnahme erhalten werden können;
a. die Eindickungspaste besteht aus
a.1 20 bis 50 Gew.T. eines Eindickungsmittels aus der Gruppe der Oxide und Hydroxide des Calciums, Magnesiums, Bariums und Aluminiums und ihrer Gemische, und
a.2 50 bis 80 Gew.T. eines Anpastpolyesters, jeweils bezogen auf 100 Gew.T. der Eindickungspaste;
b.1 der Anpastpolyester ist ein ungesättigter Polyester, der in üblicher Weise aus $\alpha,\beta$-olefinisch ungesättigten Dicarbonsäuren, bifunktionellen Alkoholen und einem Molekulargewichtsregler erhalten ist;
b.2 er weist eine Säurezahl von 10 bis 40 und eine Hydroxylzahl von 20 bis 60 auf;
die Eindickungspaste ist durch das folgende Merkmal gekennzeichnet:
c. als Molekulargewichtsregler dienen Monocarbonsäuren.
2. Verwendung der Eindickungspasten gemäß Anspruch zur Herstellung von in der Hitze härtbaren Formmassen auf Basis von ungesättigten Polyesterharzen, wobei die diesen zugrundeliegenden, ungesättigten Polyester Isophthalsäure-Einheiten enthalten.

**Claims**

1. A thickening paste for the production of a heathardenable moulding composition based on an unsaturated polyester resin, from which hardened mouldings can be obtained with only a small uptake of water;
a) the thickening paste consisting of
a.1) 20 to 50 parts by weight of a thickening agent selected from oxides and hydroxides of calcium, magnesium, barium, aluminium and their mixtures, and
a.2) 50 to 80 parts by weight of a paste-forming polyester, both based on 100 parts by weight of the thickening paste;
b.1) the paste-forming polyester being an unsaturated polyester which is obtained in a conventional manner from an $\alpha,\beta$-olefinically unsaturated dicarboxylic acid, a bifunctional alcohol and a molecular weight regulator; and
b.2) having an acid number of 10 to 40 and a hydroxyl number of 20 to 60;
the thickening paste being characterised by the following feature:
c) a monocarboxylic acid is used as molecular weight regulator.
2. The use of a thickening paste according to claim 1 for the production of a heat-hardenable moulding composition based on an unsaturated polyester resin, in which the basic unsatursted polyester contains isophthalic acid units.

**Revendications**

1. Pâte d'épaississement pour la préparation de matières à mouler durcissables à chaud, à base de résines de poly-ester insaturées, desquelles on peut tirer des pièces moulées présentant seulement une faible absorption d'eau;
a. la pâte d'épaississement est formée
a.1 de 20 à 50 parties en poids d'un épaississant pris dans le groupe des oxydes et hydroxydes de calcium, de magnésium, de baryum et d'aluminium et de leurs mélanges, et
a.2 de 50 à 80 parties en poids d'un polyester de délayage, chaque fois relativement à 100 parties en poids de la pâte d'épaississement

b.1 le polyester de délayage est un polyester insaturé qui a été obtenu de façon usuelle en partant d'acides dicarboxyliques à insaturation oléfinique en alpha, béta, d'alcools difonctionnels et d'un régulateur du poids moléculaire

b.2 il présente un indice d'acide de 10 à 40 et un indice d'hydroxyle de 20 à 50

la pâte d'épaississement est caractérisée par la particularité suivante

c. des acides monocarboxyliques servent de régulateurs du poids moléculaire.

2. L'utilisation de la pâte d'épaississement selon la revendication 1 pour la préparation de matières à mouler durcissables à chaud à base de résines de polyester insaturées, les polyesters insaturés qui sont à la base de celles-ci contenant des unités d'acide isophtalique.